Europäisches Patentamt

European Patent Office

Office européen des brevets

(11) Numéro de publication: **0 412 879 A1**

## DEMANDE DE BREVET EUROPEEN

(21) Numéro de dépôt: 90402211.8

(22) Date de dépôt: 02.08.90

(51) Int. Cl.⁵: **A47B 85/00**, A47B 85/04, A47C 17/04, A47C 17/62

(30) Priorité: 10.08.89 FR 8910760
12.02.90 FR 9001603

(43) Date de publication de la demande:
13.02.91 Bulletin 91/07

(84) Etats contractants désignés:
AT BE CH DE ES FR GB IT LI NL

(71) Demandeur: Audibert, Jacques
59, avenue de la Bourdonnais
F-75007 Paris(FR)

(72) Inventeur: Audibert, Jacques
59, avenue de la Bourdonnais
F-75007 Paris(FR)

(74) Mandataire: Sauvage, Renée
Cabinet Sauvage 100 bis, avenue de
Saint-Mandé
F-75012 Paris(FR)

(54) **Structure mobilière pliante.**

(57) La structure mobilière pliante, qui est susceptible d'avoir une configuration pliée et une configuration dépliée, comprend un plateau (2, 3) supporté par une paire de piètements opposés (14) ayant chacun une extrémité supérieure et une extrémité inférieure, ledit plateau étant divisé en deux parties (2, 3) le long d'une première ligne d'articulation (Z, Z').

Elle est caractérisée en ce que chacun desdits piètements est articulé :
- à son extrémité supérieure, selon une deuxième ligne d'articulation (Y, Y'), par rapport au bord de la partie de plateau (2, 3) qu'il supporte, opposé à ladite première ligne d'articulation (Z, Z')
- à son extrémité inférieure, selon une troisième ligne d'articulation (X, X'), par rapport à une extrémité d'un bâti (15) de forme générale plate,
de sorte qu'en configuration pliée de la structure, chacun desdits piètement (14) vient reposer sur une partie dudit bâti (15), en définissant un support plat de part et d'autre desdites parties de plateau (2, 3), lesquelles sont appliquées l'une contre l'autre et se projettent vers le haut par rapport audit bâti.

FIG1

# STRUCTURE MOBILIÈRE PLIANTE

La présente invention concerne une structure mobilière pliante, susceptible d'avoir une configuration pliée et une configuration dépliée, et qui possède deux utilités distinctes selon sa configuration. Il s'agit donc, en fait, d'une structure transformable.

Plus précisément, la structure comprend un plateau supporté par une paire de piètements opposés ayant chacun une extrémité supérieure et une extrémité inférieure, ledit plateau étant divisé en deux parties le long d'une ligne d'articulation, dite "première ligne d'articulation".

Par "piètement", on entend dans la présente description et dans les revendications soit une paire de pieds isolés, soit une paire de pieds réunis entre eux par un moins une traverse ou un panneau, soit un panneau faisant office de pieds, soit tout autre moyen de soutien équivalent.

Le Demandeur a découvert qu'à partir d'une telle structure, on pouvait concevoir de multiples éléments mobiliers transformables par pliage ou dépliage, notamment celle d'un lit transformable en un couple de fauteuils, d'un lit transformable en table, d'une table de jardin transformable en brouette, et réciproquement.

A cette fin, la structure selon l'invention est caractérisée en ce que chacun desdits piètements est articulé :
- à son extrémité supérieure, selon une deuxième ligne d'articulation, par rapport au bord de la partie de plateau qu'il supporte, opposé à ladite première ligne d'articulation, et
- à son extrémité inférieure, selon une troisième ligne d'articulation, par rapport à une extrémité d'un bâti de forme générale plate,
de sorte qu'en configuration pliée de la structure, chacun desdits piètements vient reposer sur une partie dudit bâti, en définissant un support plat de part et d'autre desdites parties de plateau, lesquelles sont appliquées l'une contre l'autre et se projettent vers le haut par rapport audit bâti.

D'une manière générale, en configuration dépliée, le plateau est parallèle au bâti et la structure offre, dans un plan perpendiculaire à ladite première ligne d'articulation, une configuration en parallélogramme rectangle.

Dans la pratique, l'angle de pivotement autour des première, deuxième et troisième lignes d'articulation est limité par des butées appropriées.

Avantageusement, la structure selon l'invention satisfait à la relation
L ≥ 2 (d + e)
formule dans laquelle :
L = longueur du bâti
d = distance comprise entre la face supérieure du plateau et la troisième ligne d'articulation des piètements sur le bâti
e = épaisseur du plateau.

Dans une forme d'exécution préférée, la plateau comporte deux parties d'extrémité solidaires chacun d'un desdits piètements et deux parties centrales, ledit plateau ayant une face supérieure et une face inférieure, la structure selon l'invention étant caractérisée en ce que lesdites parties centrales de plateau sont articulées entre elles selon ladite première ligne d'articulation et sur la partie d'extrémité voisine de plateau, selon ladite deuxième ligne d'articulation, lesdites articulations étant telles que les parties centrales de plateau peuvent être accolées entre elles face inférieure contre face inférieure et que les parties d'extrémité de plateau peuvent être accolées contre la partie centrale de plateau voisine, face supérieure contre face supérieure.

Selon une première application de l'invention, la structure constitue un lit transformable en un couple de sièges.

A cette fin, chaque d'extrémité du plateau et le piètement qui en est solidaire forment support, respectivement pour un coussin sensiblement vertical et pour une assise sensiblement horizontale de siège, lequel siège est basculé latéralement, lorsque la structure est en configuration dépliée, et est en position d'utilisation lorsque la structure est en configuration pliée.

En configuration dépliée de la structure, le plateau est garni de coussins dont la succession forme matelas.

Dans une première forme d'exécution, l'un au moins des sièges est un fauteuil dont ledit coussin vertical forme accoudoir.

Dans une seconde forme d'exécution, l'un au moins des sièges est une chauffeuse, dont ledit coussin vertical forme dossier.

De préférence, le bâti définit un caisson adapté à offrir un volume de rangement. Ce volume peut n'être accessible que lorsque la structure est en configuration dépliée et, dans le cas de l'application en lieu public ou professionnel évoquée plus loin, il pourra être utilisé pour y entreposer, entre autres, une trousse de pharmacie.

Dans une autre application de l'invention, la structure mobilière est un lit transformable en table.

Pour ce faire, chaque partie d'extrémité de plateau est pourvue la long de son bord éloigné de la deuxième ligne d'articulation, dit "bord distal", d'un panneau parallèle au piètement duquel est solidaire ladite partie de plateau, ledit panneau se projetant au-delà de celle des faces de ladite partie d'extrémité de plateau qui est opposée au piètement, sur une hauteur sensiblement égale à l'épaisseur du plateau, zone dite "supérieure" du panneau, et au-delà de l'autre face de ladite partie d'extrémité de plateau sur une hauteur sensiblement égale à la longueur d'une partie centrale de plateau, zone dite "inférieure" du panneau.

En configuration pliée de la structure, les bords libres des zones supérieures des panneaux viennent en relation de juxtaposition mutuelle tandis que lesdits panneaux viennent dans l'alignement l'un de l'autre en occupant un plan horizontal : lesdits panneaux déterminent alors ensemble un plateau de table.

En configuration dépliée de la structure, les panneaux sont éloignés l'un de l'autre et orientés verticalement, et les bords libres de leurs zones inférieures reposent sur le sol. Ils forment alors tête et pied de lit.

De préférence, chaque partie d'extrémité de plateau comporte, le long de son bord distal, un coffre parallèlépipèdique sur la face d'extrémité distale duquel est fixé ledit panneau, un bord de ce dernier affleurant la face dudit coffre parallèle à la partie d'extrémité de plateau et éloignée de cette dernière.

En configuration dépliée de la structure, celle-ci comporte donc, à la tête et au pied du lit, un coffre accessible qui peut être utilisé à des fins de rangement.

Le lit transformable en siège et le lit transformable en table trouveront leur application dans les locaux où un lit d'appoint peut être utile, par exemple chez un particulier disposant de peu d'espace ou dans un lieu public ou professionnel pour permettre à une personne prise d'un malaise de s'allonger momentanément.

Dans une autre application de l'invention, la structure sert à la réalisation d'une table de jardin transformable en brouette, notamment pour le transport de chaises de jardin, d'un parasol, etc.

A cette fin, le bâti comporte, au voisinage d'une troisième ligne d'articulation sur un premier piètement, une paire d'organes d'appui au sol tandis que le second piètement est muni d'un ensemble formant support pour une roue, de sorte qu'en configuration pliée de la table, celle-ci repose sur le sol par l'intermédiaire de ladite roue et de ladite paire d'organes d'appui au sol.

Dans la pratique, les articulations entre les piètements et le bâti permettent un pivotement limité à 90° et les articulations entre les parties de plateau permettent un pivotement limité à 180°.

Avantageusement, chacune des parties de plateau comporte, au niveau de sa zone d'articulation avec la partie de plateau voisine, des projections adaptées à venir bloquer ladite partie de plateau voisine en configuration dépliée de la table.

Le support de roue est de géométrie telle qu'en configuration dépliée, la roue n'est pas en contact avec le sol, le contact s'établissant lors du rabattage, sur le bâti, du piètement dont dépend l'ensemble support de roue.

En configuration pliée de la table, la partie inférieure du premier piètement, au-delà de l'articulation sur le bâti, forme mancherons de préhension et de soulèvement de l'ensemble pour son déplacement sur la roue, à la manière d'une brouette.

En configuration pliée de la table, chaque piètement définit un support plat adapté à recevoir une charge susceptible d'être transportée par la brouette, et il est prévu des moyens appropriés au calage de la charge contre le glissement.

Dans la pratique, chaque piètement est constitué d'une paire de pieds réunis entre eux par au moins une traverse et le bâti comprend deux longerons à chaque extrémité desquels sont articulées les paires de pieds. En variante, le bâti revêt la forme d'une H dont les barres parallèles forment traverses et dont la barre transversale forme longeron.

Différentes formes d'exécution de l'invention sont décrites ci-après par référence aux dessins annexés dans lesquels :

- la figure 1 montre, dans son application à la réalisation d'un lit transformable en un couple de fauteuils, la structure mobilière en configuration déplieé, le plateau étant dépourvu de coussins,
- la figure 1a est un schéma montrant le plateau en cours de pliage,
- la figure 2 est une figure semblable à la figure 1, le plateau étant toutefois pourvu de coussins formant matelas,
- la figure 3 montre la structure mobilière des figures 1 et 2 en configuration pliée,
- la figure 4 montre, dans son application à la réalisation d'un lit transformable en une table, la structure mobilière en configuration dépliée,
- la figure 5 montre la structure mobilière de la figure 4 en configuration pliée,
- la figure 6 montre, dans son application à la réalisation d'une table transformable en brouette, la structure mobilière en configuration dépliée, et
- la figure 7 montre la structure mobilière de la figure 6 en configuration pliée.

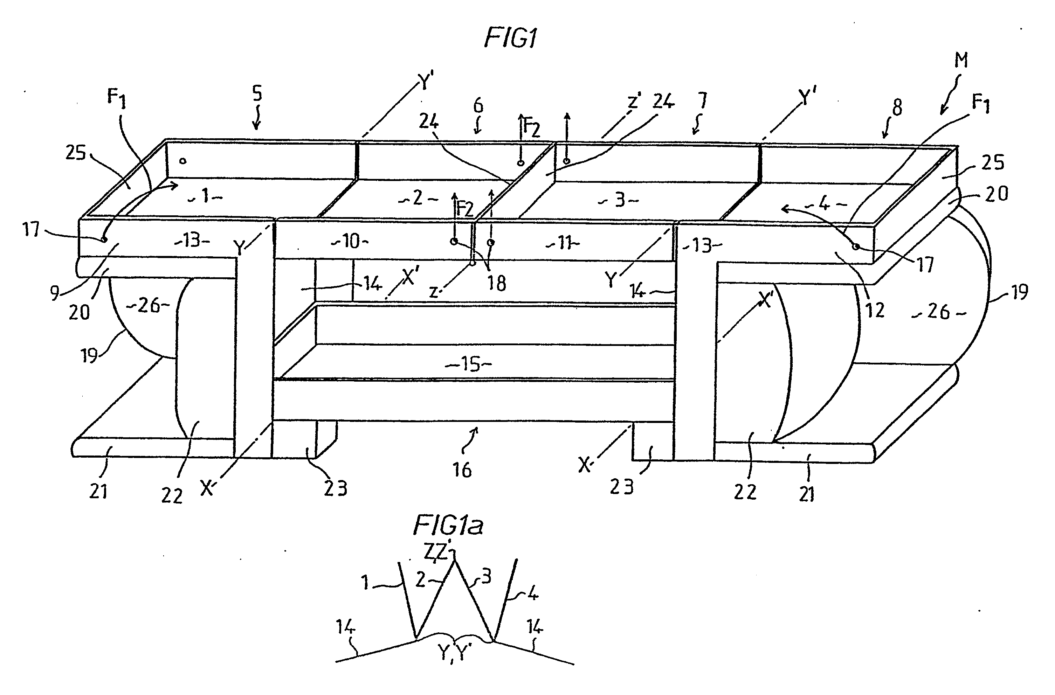

Si l'on se réfère à la figure 1, on voit un meuble M1 constitué d'un plateau supérieur en quatre parties 1-4, chacune de ces parties formant le fond d'un caisson rectangulaire 5-8 ne comportant que trois parois latérales disposés en U. Les caissons 5 et 8 d'extrémité font partie intégrante d'une structure en L 13 dont une aile est formée par un fond 1, 4 de caisson et dont l'autre aile est désignée par la référence 14.

Le meuble M1 comprend, en outre, un plateau inférieur 15 qui appartient également à un caisson 16 et dont le rôle essentiel est celui d'un bâti. le caisson 16 repose sur des pieds 23.

Les deux structures an L 13 sont montées pivotantes, d'une part, sur le bâti 16, selon les deux axes X-X' et, d'autre part, sur les caissons 6 et 7 selon les deux axes Y-Y'. Par ailleurs, les caissons 6 et 7 sont montés pivotants l'un sur l'autre le long de l'axe Z-Z'.

Comme on le voit les parois latérales avant et arrière 9 et 12 des caissons 5 et 8 et celles 10 et 11 des caissons 6 et 7 présentent des découpes circulaires, respectivement 17 et 18, formant moyens de préhension.

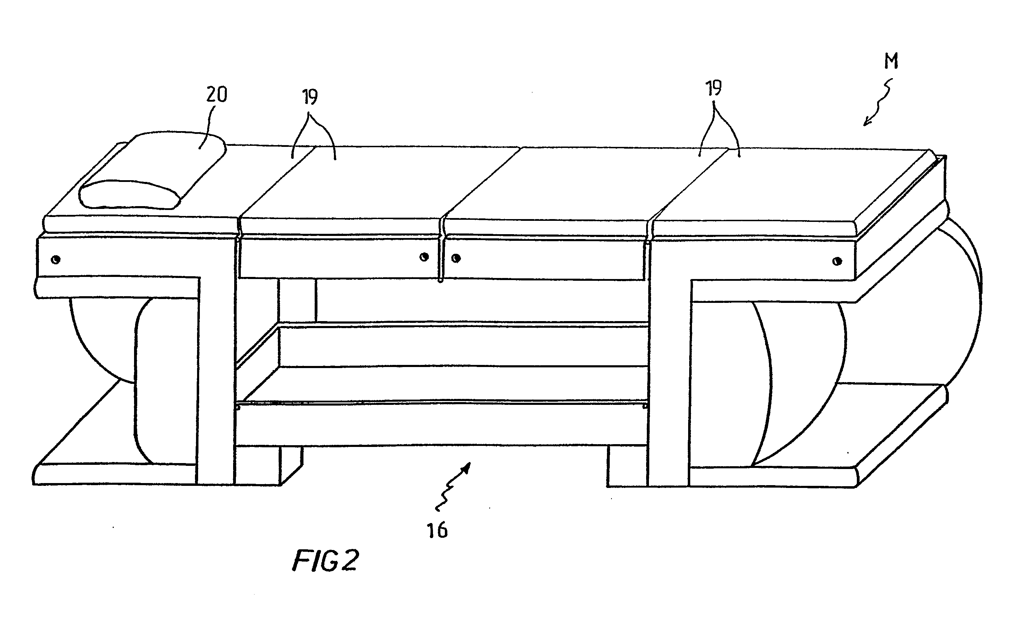

Dans sa configuration dépliée de la figure 1, le meuble M1 permet de réaliser un lit d'appoint comme le montre la figure 2. A cette fin, un coussin 19 est placé dans chacun des caissons 5-8 et l'ensemble des coussins forme matelas. Un oreiller 20 peut compléter l'ensemble.

Le caisson 16 peut servir à entreposer l'oreiller 20 et, selon l'utilisation envisagée pour le meuble, une trousse de pharmacie, des livres, un réveil, etc...

Il ressort en outre de la figure 1 que, dans sa configuration dépliée, le meuble M1 comporte deux fauteuils 19 basculés latéralement. Les accoudoirs 20 desdits fauteuils 19 sont solidaires, respectivement, des fonds de caisson 1 et 4 tandis que les accoudoirs 21 reposent sur le sol. L'assise 22 des fauteuils 19 est, elle, solidaire de l'aile 14 de l'élément en L 13. Le dossier est désigné par la référence 26.

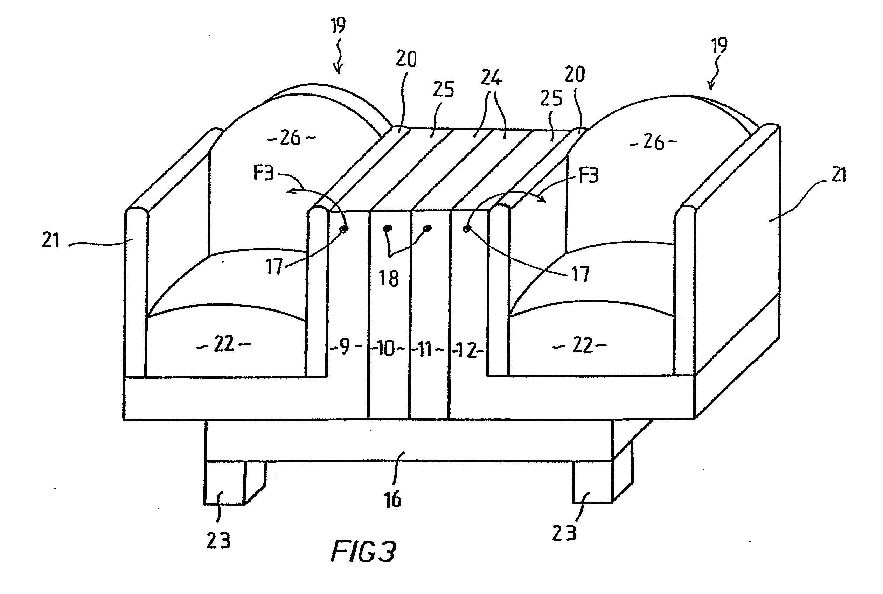

Si, par l'intermédiaire des découpes 17 et 18, on exerce un traction respectivement selon les flèches F1 et F2 (figure 1), le plateau 1-4 se plie en W autour des axes Z-Z' et Y-Y' (figure 1a), de sorte que la face ouverte du caisson 5 vient s'appliquer contre la face ouverte du caisson 6 et que la face ouverte du caisson 7 vient s'appliquer contre la face ouverte du caisson 8, tandis que les fonds 2 et 3 des caissons 6 et 7 viennent s'appliquer l'un contre l'autre. Simultanément, les ailes 14 qui sont solidaires des caissons 5 et 8, pivotent autour des axes X-X' et, en fin de course, le meuble M1 plié a la configuration représentée à la figure 3.

Dans cette configuration, les fauteuils 19 sont en position d'utilisation. Les parois latérales médianes 24 des caissons 6 et 7 et celles d'extrémités 25 des caissons 5 et 8 forment ensemble un plan horizontal sur lequel pourront être posés, par exemple, un lampe, un cendrier, etc.

Comme on le voit, dans cette configuration pliée, le volume de rangement du caisson 16 n'est pas accessible.

Pour repasser en configuration dépliée, il suffit d'exercer, par l'intermédiaire des découpes 17, une traction selon les flèches F3 ce qui entraîne un mouvement inverse à celui décrit précédemment.

Au lieu de fauteuils 19 orientés dans la même direction, le meuble M pourrait comporter deux chauffeuses orientées dos à dos. Dans ce cas, l'accoudoir 21 et le dossier 26 seraient supprimés, l'accoudoir 20 convenablement galbé formerait dossier et l'assise 22 serait réorientée.

Le meuble M1 pourrait également comporter un fauteuil et une chauffeuse, les places offertes étant alors perpendiculaires l'une à l'autre.

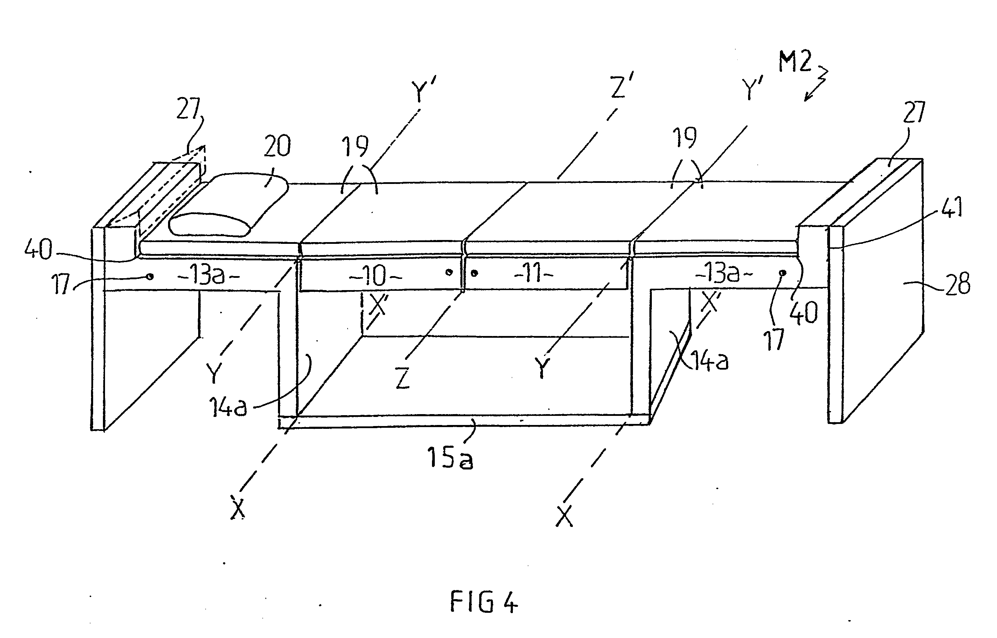

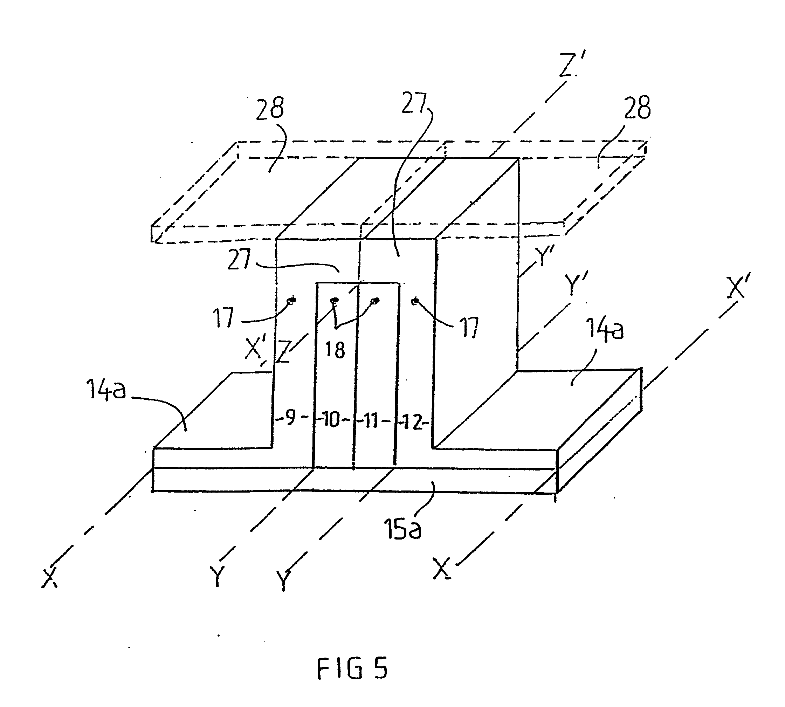

Dans les figure 4 et 5, on a utilisé les mêmes référence qu'aux figures 1 et 3 lorsqu'il s'agit de désigner les mêmes éléments qui ne seront pas décrits de nouveau. Les éléments similaires, mais non identiques, sont désignés par le même référence qu'aux figures 1 et 3, mais accompagnée de la lettre a .

Le meuble M2 des figures 4 et 5 se distingue fondamentalement du meuble M par le fait :
- que le bâti 15a est constitué d'une simple plaque sans pieds,
- que la structure en L 13a se prolonge, le long de son bord distal 40, à l'opposé du piètement 14a, et dans une direction parallèle mais de sens contraire à celle dudit piètement, par un coffre 27, représenté fermé en trait plein, et ouvert en pointillés sur la partie gauche de la figure 4. De plus, un panneau 28 est fixé sur la face d'extrémité distale 41 du coffre 27. Le bord supérieur du panneau 28 affleure la face supérieure du coffre 27 et son bord inférieur repose sur le sol. Du fait qu'il est solidarisé au coffre 27, lui-même solidarisé à la structure en L 13a, le panneau 28 pivote lorsque pivote la structure en L 13a.

La manoeuvre du meuble M2 est la même que celle du meuble M1 et il est donc inutile de la décrire. On voit, à la figure 4, qu'en configuration dépliée, le meuble M2 se présente comme un lit, muni à la tête et au pied, d'un petit coffre de rangement. L'espace laissé vacant sous les parties centrales de plateau pourra permettre le rangement d'une valise lorsque le meuble M2 sert de lit d'appoint. En configuration pliée, le meuble M2 forme table dont le plateau est constitué par la juxtaposition des panneaux 28.

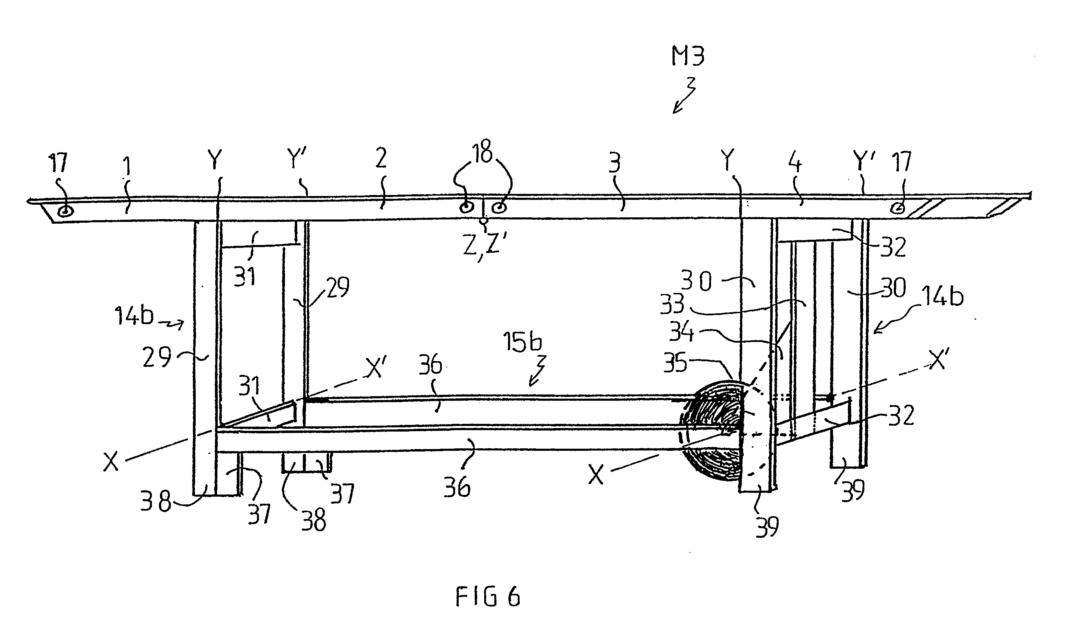

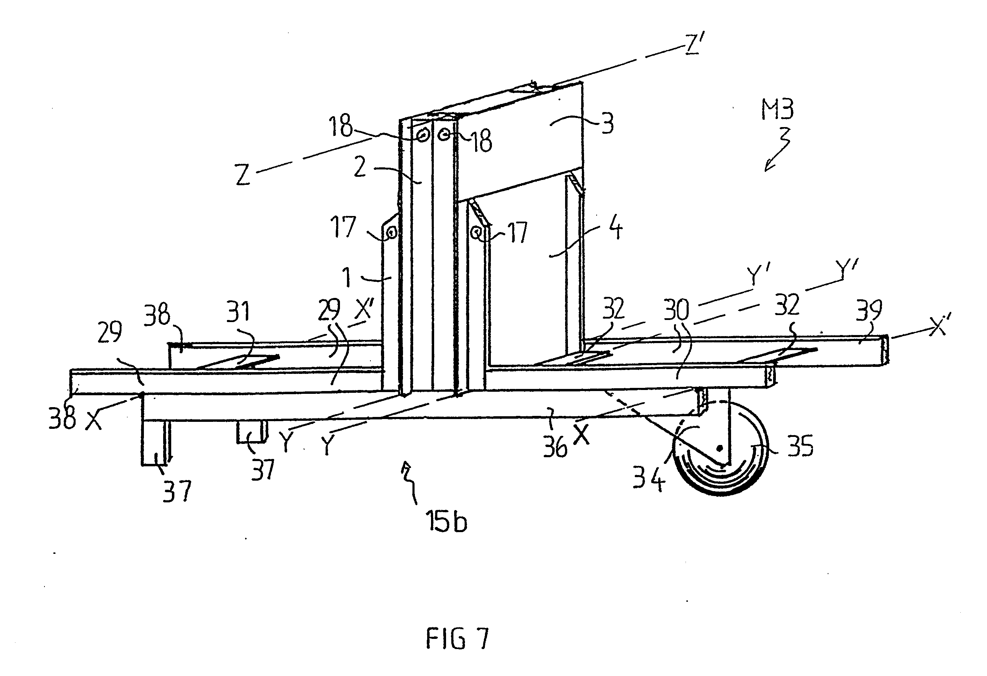

Dans les figures 6 et 7, on a utilisé les mêmes références qu'aux figures 1 et 3 lorsqu'il s'agit de désigner les mêmes éléments qui ne seront par décrits de nouveau. Les éléments similaires, mais non identiques, sont désignés par la même référence qu'aux figures 1 et 3, mais accompagnée de la lettre b .

Le meuble M3 des figures 6 et 7 se distingue fondamentalement du meuble M par le fait quel :
- le plateau 1-4 ne détermine pas de caissons ;
- les piètements 14b sont constitués chacun d'une paire de pieds 29 et 30, les pieds de chaque paire étant réunis à leur partie supérieure et à leur partie inférieure par une traverse 31 et 32, et les traverses 32 de la paire 30 étant elles-même réunies par une entretoise 33 ; cette entretoise 33 sert de support à un étrier triangulaire 34 entre les bras duquel est montée une roue 35 ;

- le bâti 15b est contitué de deux longerons 36 comportant, à l'opposé de la roue 35, une paire de pieds 37.

Comme il ressort de la figure 6, en configuration dépliée du meuble M3, celui-ci repose, à une extrémité, sur la base 38 des pieds 29 du piètement 14b et sur les pieds 37 du bâti 15b et, à l'autre extrémité, sur la base 39 des pieds 30 du piètement 14b. La roue 35 ne touche pas le sol.

En configuration pliée (figure 7), le meuble M3 repose sur les pieds 37 du bâti 15b et sur la roue 35. L'extrémité 38 des pieds 29 qui se projette au-delà de la ligne d'articulation X-X', forme mancheron de préhension pour soulever et faire rouler le meuble M3 à la manière d'une brouette.

Les pieds 29 et leurs traverses 31, tout comme les pieds 30 et leurs traverses 32, déterminent une surface sensiblement plate capable d'accueillir une charge à transporter, par exemple des chaises de jardin. Des moyens de calage seront prévus au voisinage des extrémités 39 de pieds pour éviter que la charge placée sur les pieds 32 ne puisse glisser.

Comme il ressort de la description qui précède, la structure selon l'invention se prête à de multiples applications et l'invention n'est donc aucunement limitée aux formes de réalisation décrites à titre d'exemples.

En particulier, dans certaines formes d'exécution, notamment celle des figures 4 et 5, le bâti 15a de forme générale plate et les troisièmes lignes d'articulation X-X' pourraient être virtuels, lorsqu'un réel bâti n'est pas nécessaire à la rigidité du meuble correspondant. Das ce cas, serait considéré comme bâti le quadrilatère défini par les extrémités inférieures de la paire de piètements.

Les meubles selon l'invention pourront être réalisés en bois, en métal, ou tout autre matériau, la matière plastique moulée étant toutefois préférée lorsqu'il s'agira de fabriquer des meubles susceptibles d'être exposés aux intempéries, tels que la table-brouette.

**Revendications**

1 - Structure mobilière pliante, susceptible d'avoir une configuration pliée et une configuration dépliée, ladite structure comprenant un plateau (2, 3) supporté par une paire de piètement opposés (14, 14a, 14b) ayant chacun une extrémité supérieure et une extrémité inférieure, ledit plateau étant divisé en deux parties (2, 3) le long d'une première ligne d'articulation (Z, Z'), caractérisée en ce que chacun desdits piètements est articulé :

- à son extrémité supérieure, selon une deuxième ligne d'articulation (Y, Y'), par rapport au bord de la partie de plateau (2, 3) qu'il supporte, opposé à ladite première ligne d'articulation (Z, Z'

- à son extrémité inférieure, selon une troisième ligne d'articulation (X, X'), par rapport à une extrémité d'un bâti (15, 15a, 15b) de forme générale plate,

de sorte qu'en configuration pliée de la structure, chacun desdits piètements (14, 14a, 14b) vient reposer sur une partie dudit bâti (15, 15a, 15b), en définissant un support plat de part et d'autre desdites parties de plateau (2, 3), lesquelles sont appliquées l'une contre l'autre et se projettent vers le haut par rapport audit bâti.

2 - Structure selon la revendication 1, caractérisée en ce que, en configuration dépliée, elle a, dans un plan perpendiculaire à ladite première ligne d'articulation (Z, Z'), une configuration en parallélogramme rectangle.

3 - Structure selon la revendication 1 ou 2, caractérisée en ce qu'elle satisfait à la relation

L ≥ 2 (d + e)

formule dans laquelle :

L = longueur du bâti (15, 15a, 15b)

d = distance comprise entre la face supérieure du plateau (1-4) et la troisième ligne d'articulation (X, X') des piètement (14, 14a, 14b) sur le bâti (15, 15a, 15b)

e = épaisseur du plateau (1-4).

4 - Structure selon l'une quelconque des revendications 1 à 3, dans laquelle ledit plateau comporte deux parties d'extrémité (1, 4) solidaires chacune d'un desdits piètements (14, 14a, 14b) et deux parties centrales (2, 3), ledit plateau (1-4) ayant une face supérieure et une face inférieure, caractérisée en ce que lesdites parties centrales (2, 3) de plateau sont articulées entre elles selon ladite première ligne d'articulation (Z, Z') et sur la partie d'extrémité voisine de plateau (1, 4), selon ladite deuxième ligne d'articulation (Y, Y'), lesdites articulations étant telles que les parties centrales de plateau (2, 3) peuvent être accolées entre elles face inférieure contre face inférieure et que les parties d'extrémité de plateau (1, 4) peuvent être accolées contre la partie centrale de plateau (2, 3) voisine, face supérieure contre face supérieure.

5 - Lit transformable ayant la structure selon l'une quelconque des revendications 1 à 4, caractérisé en ce que chaque partie d'extrémité (1, 4) de plateau et le piètement (14) qui en est solidaire formant support (13), respectivement pour un coussin sensiblement vertical (20) et une assise sensiblement horizontale (22) de siège (19), lequel siège (19) est basculé latéralement, lorsque la structure est en configuration dépliée, et est en position d'utilisation lorsque la structure est en configuration plieé.

6 - Lit transformable selon la revendication 5, caractérisé en ce que l'un au moins des sièges (19) est un fauteuil, ledit coussin vertical (20) formant accoudoir.

7 - Lit transformable selon la revendication 5, caractérisé en ce que l'un au moins des sièges (19) est une chauffeuse, ledit coussin vertical (20) formant dossier.

8 - Lit transformable ayant la structure selon l'une quelconque des revendications 1 à 4, caractérisé en ce que chaque partie d'extrémité de plateau (1, 4) est pourvue le long de son bord (40) éloigné de la deuxième ligne d'articulation (Y, Y'), dit "bord distal", d'un panneau (28) parallèle au piètement duquel est solidaire ladite partie de plateau (1, 4), ledit panneau (28) se projetant au-delà de celle des faces de ladite partie d'extrémité de plateau (1, 4) qui est opposée au piètement, sur une hauteur sensiblement égale à l'épaisseur du plateau (1-4) et au-delà de l'autre face de ladite partie d'extrémité de plateau (1,4) sur une hauteur sensiblement égale à la longueur d'une partie centrale (2, 3) de plateau.

9 - Lit transformable selon la revendication 8, caractérisé en ce que chaque partie d'extrémité de plateau (1, 4) comporte, le long de son bord distal, un coffre (27) parallélèpipèdique sur la face d'extrémité distale (41) duquel est fixé ledit panneau (28), un bord de ce dernier affleurant la face dudit coffre qui est parallèle à la partie d'extrémité de plateau et éloignée de cette dernière.

10 - Table ayant la structure selon l'une quelconque des revendications 1 à 4, caractérisée en ce que le bâti (15b) comporte, au voisinage d'une troisième ligne d'articulation (X,X') sur un premier piètement (29), une paire d'organes d'appui au sol (37) tandis que le second piètement (30) est muni d'un ensemble (32-34) formant support pour une roue (35), de sorte qu'en configuration pliée de la table, celle-ci repose sur le sol par l'intermédiaire de ladite roue (35) et dudit premier piètement (29).

11 - Table selon la revendications 10, caractérisée en ce que l'ensemble support (32-34) de roue est de géométrie telle qu'en configuration dépliée la roue (35) n'est pas en contact avec le sol, le contact s'établissant lors du rabattage, sur le bâti (15b), du piètement (30) dont dépend l'ensemble support de roue (32-34).

12 - Table selon la revendication 10 ou 11, caractérisée en ce que, en configuration plieé de la table, la partie inférieure (38) du premier piètement (29) au-delà de l'articulation (X,X') sur le bâti (15b) forme mancherons de préhension et de soulèvement de l'ensemble pour son déplacement sur la roue (35), à la manière d'une brouette.

13 - Table selon la revendication 12, caractérisée en ce qu'en configuration pliée de la table, les piètements (29, 31 ; 30, 32) définissent chacun un support plat adapté à recevoir une charge susceptible d'être transportée par la brouette.

FIG1

FIG1a

FIG2

EP 0 412 879 A1

FIG3

FIG 4

EP 0 412 879 A1

FIG 5

EP 0 412 879 A1

FIG 6

EP 0 412 879 A1

FIG 7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-U-8 707 273 (STANZEWERK WETTER SICHELSCHMIDT) * page 4, alinéa 1; figure 1 * | 1,2 | A 47 B 85/00 A 47 B 85/04 A 47 C 17/04 A 47 C 17/62 |
| A | FR-A-1 282 735 (USINES MATALLURGIES DE LITERIE) * abrégé; figures 11-15 * | 5 | |
| A | GB-A-2 041 734 (DANIN) * page 1, lignes 107 - 129; figures 1-5 * * page 2, lignes 1 - 44 * | 5 | |
| A | BE-A-5 308 70 (WOOLLCOTT) * page 1, lignes 1 - 13; figures 1-4 * | 8 | |
| A | DE-A-1 779 030 (BRUNN) * pages 2 - 5; figures 1-32 * | 10,12,13 | |
| A | FR-A-7 388 68 (BARTHELEMY) * page 2, lignes 14 - 22; figures 1, 2, 4 * | 1 | |
| A | FR-A-2 138 048 (ENTRYOWN PATENTS LTD.) * figures 1, 2, 3 * | 1,2 | DOMAINES TECHNIQUES RECHERCHES (Int. Cl.5) |
| A | GB-A-6 721 92 (REDDIE AND GROSE) * figures 1, 2, 3 * | 10 | A 47 B A 47 C B 62 B |
| A | FR-A-9 686 10 (VERGNAUD) * figures 1, 2, 3 * | 10,11 | |
| A | US-A-4 439 085 (RODRIGUEZ, ZAVAGLIA) | | |

Le présent rapport de recherche a été établi pour toutes les revendications

| Lieu de la recherche | Date d'achèvement de la recherche | Examinateur |
|---|---|---|
| La Haye | 20 novembre 90 | JONES C.T. |